# EUROPÄISCHE PATENTSCHRIFT

(11) **EP 2 090 945 B1**
(45) Veröffentlichungstag und Bekanntmachung des Hinweises auf die Patenterteilung: **26.10.2011**
(21) Anmeldenummer: 08002771.7
(22) Anmeldetag: 14.02.2008
(51) Int. Cl.: G05B 19/042, G05B 19/05, G05B 19/418, G06F 11/16, G01R 31/28

(54) **Eingabebaugruppe und Verfahren zur Fehlererkennung**
Input components and method for recognising errors
Composant de saisie et procédé de détection d'erreurs

(43) Veröffentlichungstag der Anmeldung: 19.08.2009
(73) Patentinhaber: SIEMENS AKTIENGESELLSCHAFT, 80333 München (DE)
(72) Erfinder: Gramolla, Tobias, 92245 Kümmersbruck (DE); Ilic, Domagoj, 92224 Amberg (DE); König, Mathias, 91284 Neuhaus an der Pegnitz (DE); Maier, Mario, 92266 Ensdorf (DE); Mark, Reinhard, 91217 Hersbruck (DE); Singer, Monika, 92263 Ebermannsdorf (DE)

(56) Entgegenhaltungen:
- WO-A-2005/083535
- DE-A1- 4 210 676
- US-A- 5 589 766
- US-A1- 2004 078 715

## Beschreibung

Die Erfindung betrifft eine Eingabebaugruppe zur Erfassung analoger Messwerte, umfassend einen ersten Eingangskanal für ein erstes Messsignal, einen zweiten Eingangskanal für ein zweites Messsignal, einen ersten Multiplexer, einen zweiten Multiplexer, einen ersten Analog-Digital-Umsetzer, einen zweiten Analog-Digital-Umsetzer, wobei je einem Eingangskanal je ein Multiplexer zugeordnet ist und der erste Multiplexer mit dem ersten und dem zweiten Analog-Digital-Umsetzer derart verschaltet ist, dass das erste Messsignal als erster Eingangswert am ersten Analog-Digital-Umsetzer und als zweiter Eingangswert am zweiten Analog-Digital-Umsetzer anliegt. Des Weiteren betrifft die Erfindung ein Verfahren zur Fehlererkennung bei dem Betrieb einer Eingabebaugruppe zur Erfassung analoger Messwerte.

In der Automatisierungstechnik ist es bei sicherheitsrelevanten Prozessen erforderlich, bestimmte Prozessgrößen fehlersicher zu erfassen. Hierbei erfolgt die Erfassung von analogen Eingangssignalen, wie z.B. Druck, Temperatur, Durchfluss, Füllstand, usw., z.B. durch eine 0...20 mA- oder 4...20 mA-Schnittstelle. Bedingt durch Normen, gesetzliche Auflagen und/oder zum Schutz von Mensch und Maschine ist es erforderlich, diese als Eingangssignale vorliegenden Messwerte nahezu fehlerfrei zu erfassen.

Nach dem Stand der Technik gibt es bereits Eingabebaugruppen, welche Analogwerte redundant und fehlersicher erfassen können. Aus der US 2004/007871 5 A1 bzw. aus der korrespondierenden EP 1 282 859 B1 ist ein Peripheriebaustein mit hoher Fehlersicherheit für speicherprogrammierbare Steuerungen bekannt. Der Peripheriebaustein kann als Eingabebaugruppe betrachtet werden und weist dazu eine Analog-Eingabe-Schaltung mit wenigstens zwei weitgehend identisch aufgebauten Kanälen zur parallelen Signal-Ein- und/oder -Ausgabe auf. Nachteilig an den nach dem Stand der Technik bekannten Eingabebaugruppen ist es, dass Fehler, welche beispielsweise bei den Multiplexern oder allgemein innerhalb der Baugruppe auftreten, nicht erkannt werden.

Aufgabe der Erfindung ist es, eine Eingabebaugruppe bereitzustellen, welche eine Fehleraufdeckung bei internen Fehlern ermöglicht. Beispielsweise die Fehleraufdeckung der Fehler, die durch die bei den Eingabebaugruppen eingesetzten Multiplexern hervorgerufen werden.

Die Aufgabe wird durch eine Eingabebaugruppe mit den Merkmalen des Anspruchs 1 gelöst. Der Erfindung liegt die Erkenntnis zugrunde, dass innerhalb einer Spannungsmasche die Eingangsspannung des Analog-Digital-Umsetzers beeinflusst werden kann. Durch das Einfügen von Mitteln zur Bildung einer Differenz in der Spannungsmasche, welche im Wesentlichen durch die Eingangsspannung am Analog-Digital-Umsetzer und die Eingangsspannung des Messsignals gebildet wird, lässt sich ein als Eingangswert am Analog-Digital-Umsetzer anliegendes Potenzial verschieben. Beispielsweise liegen in der Spannungsmaschen einer Eingabebaugruppe im fehlerfreien Fall symmetrische Verhältnisse vor. Hingegen wird die Symmetrie im Fehlerfall gestört. Diese Unsymmetrie lässt sich auswerten und damit ein Fehlerfall innerhalb der Eingabebaugruppe feststellen.

Dabei sind die Mittel zur Bildung der Differenz als zwischen den Multiplexern und den Eingängen der Analog-Digital-Umsetzer angeordnete Längswiderstände ausgebildet, wobei in der Eingabebaugruppe eine Aufschaltvorrichtung zum Aufschalten von Testpegeln an den Analog-Digital-Umsetzer vorhanden ist. Durch die Aufschaltung mehrerer verschiedener Messwerte wird die Fehleraufdeckung in einer Eingabebaugruppe durch ein weiteres erhöht. Ein über den Längswiderstand fließender Strom hat einen Spannungsabfall an diesen Längswiderstand zur Folge und beeinflusst somit die Symmetrie der Spannungsmasche bzw. sorgt er für eine Differenz zwischen dem ersten Eingangswert und dem zweiten Eingangswert. Durch die Längswiderstände, welche dem Multiplexer nachgeschaltet sind, ist es möglich, beliebige Fehler, wie z.B. Unterbrechungen, Kurzschlüsse oder Common Cause-Fehler bei den Multiplexern durch den Vergleich bzw. den Test der Analog-Digital-Umsetzer aufzudecken.

In einer weiteren bevorzugten Ausgestaltung sind die Eingangskanäle als Spannungsteiler ausgebildet. Ein über den Spannungsteiler fließendes Prozesssignal, z.B. 4...20 mA ruft an dem Spannungsteiler, welcher aus zwei gleichwertigen Widerständen besteht, zwei gleiche Spannungsabfälle hervor. Diese zwei gleichen Teilspannungen werden mittels des Multiplexers über mehrere Schalter und über die Längswiderstände zum Einen als eine erste Teilspannung an den ersten Analog-Digital-Umsetzer geführt und zum Anderen als eine zweite Teilspannung an den zweiten Analog-Digital-Umsetzer geführt. Im fehlerfreien Zustand muss somit an beiden Analog-Digital-Umsetzern eine Eingangsspannung gleicher Höhe anliegen.

Vorzugsweise ist zum Vergleich der durch den Analog-Digital-Umsetzer digitalisierten Eingangswerte ein Microcontroller mit dem Analog-Digital-Umsetzer verschaltet. In dem Microcontroller, welcher als eine Auswerteeinheit ausgelegt ist, findet ein Vergleich der von den Analog-Digital-Umsetzern ermittelten digitalisierten Analogwerte statt. Solch eine Auswerteeinheit kann beispielsweise als ein ASIC oder FPGA ausgestaltet sein.

Verfahrensmäßig wird die Fehlererkennung bei einer Eingabebaugruppe zur Erfassung analoger Messwerte, wobei über einen ersten Eingangskanal ein erstes Messsignal mittels eines Multiplexers an den Eingang eines ersten Analog-Digital-Umsetzers als erster Eingangswert und an den Eingang eines zweiten Analog-Digital-Umsetzer als zweiten Eingangswert geschaltet wird, wobei im Fehlerfall die Eingangswerte über Mittel zur Bildung einer Differenz beeinflusst werden und diese Differenz als Fehler erkannt wird, durch die Merkmale des Anspruchs 5 gelöst werden.

Weitere verfahrensgemäße Vorteile sind dem Beispiel zu entnehmen.

Bevorzugt wird bei dem Verfahren der digitalisierte analoge ersten Eingangswert mit dem digitalisierten analogen zweiten Eingangswert verglichen und wenn die Differenz eine bestimmbare Grenze überschreitet ein Fehler gemeldet. Durch den Vergleich der bereits digitalisierten Werte ist es möglich, auch die fehlerfreie Funktion der Analog-Digital-Umsetzer zu betrachten.

Im Folgenden wird die Erfindung anhand der Figuren näher beschrieben und erläutert. Es zeigt:

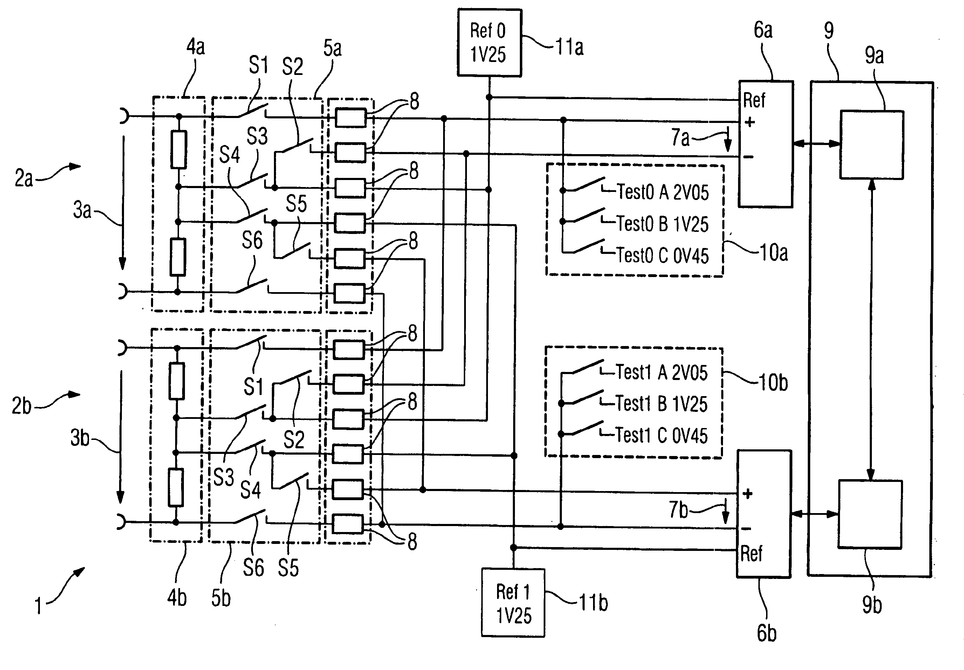

FIG 1 ein Blockschaltbild einer Eingabebaugruppe mit Längswiderständen und Multiplexer.

Gemäß FIG 1 ist eine Eingabebaugruppe 1 zur Erfassung eines analogen ersten Messsignals 3a und eines analogen zweiten Messsignals 3b vereinfacht dargestellt. Das erste Messsignal 3a liegt am ersten Eingangskanal 2a an und wird über den ersten Spannungsteiler 4a in zwei Teilspannungen gleicher Höhe aufgeteilt. In der folgenden Beschreibung wird nur das erste Messsignal 3a fehlersicher erfasst und das zweite Messsignal 3b wird vorläufig nicht betrachtet. Zur Erfassung des ersten Messsignals 3a sind die Schalter S1 bis S6 des ersten Multiplexers 5a geschlossen. Die erste Teilspannung des ersten Spannungsteilers 4a wird über folgenden Stromlaufweg an den ersten Analog-Digital-Umsetzer 6a geführt. Ausgehend vom oberen Anschlusspunkt des Eingangskanals 2a über den ersten Schalter S1 des Multiplexers 5a liegt in Reihe zum ersten Schalter S1 des Multiplexers 5a ein Längswiderstand 8. Über diesen Längswiderstand 8 ist der positive Eingangspunkt des ersten Analog-Digital-Umsetzers 6a angeschlossen. Der weitere negative Anschlusspunkt des ersten Analog-Digital-Umsetzers 6a führt über einen weiteren Längswiderstand 8 und über einen zweiten Schalter S2 und einen dritten Schalter S3 des Multiplexers 5a in den Mittelabgriff des ersten Spannungsteilers 4a. Durch diese Schaltungsanordnung wird die erste Teilspannung des ersten Spannungsteilers 4a als erster Eingangswert 7a an den ersten Analog-Digital-Umsetzer 6a geführt. Die Längswiderstände 8 weisen dabei gegenüber dem Eingangswiderstand der Analog-Digital-Umsetzer 6a,6b einen Wert von 15 kΩ auf, wobei die Analog-Digital-Umsetzer 6a,6b ca. einen Eingangswiderstand von 80 MΩ aufweisen. Da das Verhältnis der Längswiderstände 8 zu den Eingangswiderständen der Analog-Digital-Umsetzer 6a,6b sehr hoch ist, beeinflussen die Längswiderstände 8 im fehlerfreien Fall das Messergebnis der Analog-Digital-Umsetzer 6a,6b nicht.

Die zweite Teilspannung des ersten Spannungsteilers 4a vom ersten Eingangskanal 2a wird über einen vierten Schalter S4 und einen fünften Schalter S5 des ersten Multiplexers 5a ebenfalls mittels eines Längswiderstandes 8 an den zweiten Analog-Digital-Umsetzer 6b geführt. Der Strom, der hierbei am zweiten Analog-Digital-Umsetzer 6b die Spannung für den zweiten Eingangswert 7b hervorruft, findet seinen Rückweg zum ersten Eingangskanal 2a über einen weiteren Längswiderstand 8 und über einen sechsten Schalter S6 des ersten Multiplexers 5a. Durch die redundante Abbildung des ersten Messsignals 3a an jeweils einen voneinander unabhängig arbeitenden Analog-Digital-Umsetzer 6a,6b erhöht sich bereits die Verfügbarkeit der Erfassung des ersten Messsignals 3a.

Da aber auch die Schalter S1 bis S6 der Multiplexer 5a, 5b fehleranfällig sind und bisher keine Möglichkeit zur Verfügung stand, die Funktionsweise der Schalter S1 bis S6 der Multiplexer 5a, 5b zu testen, wird durch die Reihenschaltung der Längswiderstände 8 nun die Möglichkeit der Fehleraufdeckung für Fehler der Multiplexer 5a, 5b gegeben. Folgender Fehlerfall wäre vorstellbar:

Während der Erfassung des ersten Messsignals 3a über den ersten Eingangskanal 2a ist der erste Multiplexer 5a aktiv und der zweite Multiplexer 5b inaktiv. Aktiv bedeutet hierbei, dass alle Schalter S1 bis S6 des ersten Multiplexers 5a im fehlerfreien Zustand geschlossen sind. Inaktiv bedeutet hierbei, dass alle Schalter S1 bis S6 des zweiten Multiplexers 5b im fehlerfreien Zustand geöffnet sind. Als Fehler im zweiten Multiplexer 5b liegt nun vor, dass der erste Schalter S1 nicht mehr öffnet. Über diesen defekten Schalter S1 des zweiten Multiplexers 5b kann nun ein Ausgleichsstrom fließen. Dieser Ausgleichsstrom macht sich an dem relativ niederohmigen Längswiderstand 8 als Spannungsabfall bemerkbar. Dieser zusätzliche Spannungsabfall am Längswiderstand 8 führt dazu, dass eine Differenz zwischen dem ersten Eingangswert 7a und dem zweiten Eingangswert 7b auftritt. Ein mit dem ersten und zweiten Analog-Digital-Umsetzer 6a,6b verbundener Microcontroller 9 wertet die digitalisierten Analogwerte aus und vergleicht sie miteinander. Wird bei diesem Vergleich eine vorgegebene Grenze überschritten, so wird das über den Microcontroller 9 als Fehler gemeldet. Der Microcontroller 9 hat des Weiteren die Aufgabe, über nicht dargestellte Signalleitungen die Multiplexer 5a, 5b und jeweils eine erste und eine zweite Aufschaltvorrichtung 10a, 10b zu steuern. Der Microcontroller 9 weist weiterhin für die Erfassung der digitalisierten Werte einen ersten und einen zweiten Microcontroller 9a,9b auf.

Für weitere Tests der Funktionstüchtigkeit des ersten und zweiten Multiplexers 5a, 5b und der Funktionstüchtigkeit des ersten und zweiten Analog-Digital-Umsetzers 6a,6b können für den ersten Eingangskanal 2a und den zweiten Eingangskanal 2b über eine erste Aufschaltvorrichtung 10a und über eine zweite Aufschaltvorrichtung 10b je ein Testpegel A von 2,05 V, ein Testpegel B von 1,25 V und ein Testpegel C von 0,45 V an die Analog-Digital-Umsetzer 6a,6b angeschaltet werden. Aufgrund der im Fehlerfall über den Längswiderständen 8 abfallenden Spannung und der dadurch entstehenden Unsymmetrien in den unterschiedlichen Spannungsmaschen können Fehler aufgedeckt werden. Die Aufschaltung der Testpegel A bis C erfolgt jeweils in Verbindung mit einer Prüfung eines Referenzsignales 11a bzw. 11b von 1,25 V.

Durch die Integration von Längswiderständen 8 in die Messwerterfassung von Analogwerten und einer entsprechenden Anpassung einer Auswerteeinheit, hier der Microcontroller 9, kann die Fehlersicherheit, d.h. das sichere Erkennen eines Fehlers innerhalb der Eingabebaugruppe 1, erheblich erhöht werden. Des Weiteren kann bei einer Eingabebaugruppe 1 durch die Verwendung von Delta-Sigma-Umsetzern, aufgrund der spezifischen Eigenart dieser Umsetzer ein Test mit den Testpegeln A bis C in einer kürzeren Zeit erfolgen als bei dem Einsatz von herkömmlichen Umsetzern.

Als Schalter können sämtliche schaltende aktive Bauelemente betrachtet werden, z.B. Halbleiterschalter wie Transistoren.

## Patentansprüche

1. Eingabebaugruppe (1) zur Erfassung analoger Messwerte, umfassend einen ersten Eingangskanal (2a) für ein erstes Messsignal (3a), einen zweiten Eingangskanal (2b) für ein zweites Messsignal (3b), einen ersten Multiplexer (5a), einen zweiten Multiplexer (5b), einen ersten Analog-Digital-Umsetzer (6a), einen zweiten Analog-Digital-Umsetzer (6b), wobei je einem Eingangskanal (2a,2b) je ein Multiplexer (5a,5b) zugeordnet ist und der erste Multiplexer (5a) mit dem ersten und dem zweiten Analog-Digital-Umsetzer (6a,6b) derart verschaltet ist, dass das erste Messsignal (3a) als erster Eingangswert (7a) am ersten Analog-Digital-Umsetzer (6a) und als zweiter Eingangswert (7b) am zweiten Analog-Digital-Umsetzer (6b) anliegt, wobei zwischen den Eingangskanälen (2a,2b) und den Analog-Digital-Umsetzern (6a,6b) Mittel zur Bildung einer Differenz zwischen dem ersten Eingangswert (7a) und dem zweiten Eingangswert (7b) angeordnet sind, wobei die Mittel zur Bildung der Differenz als zwischen den Multiplexern (5a, 5b) und den Eingängen der Analog-Digital-Umsetzer (6a,6b) angeordnete Längswiderstände (8) ausgebildet sind, d a - **durch gekennzeichnet**, dass eine erste Aufschaltvorrichtung (10a) und eine zweite Aufschaltvorrichtung (10b) vorhanden ist, wobei diese ausgestaltet sind je einen Testpegel an den ersten und zweiten Analog-Digital-Umsetzer (6a,6b) derart zu schalten, dass für den Fall, dass ein Schalter (S1, ..., S6) eines der Multiplexer (5a,5b) nicht mehr korrekt öffnet, über die Längswiderstände (8) Spannungen abfallen können, wobei durch die entstehenden Unsymmetrien ein Fehlerfall aufgedeckt wird.

2. Eingabebaugruppe (1) nach Anspruch 1, wobei der erste Analog-Digital-Umsetzer (6a) mit einer ersten Referenzspannungsquelle (11a) und der zweite Analog-Digital-Umsetzer (6b) mit einer zweiten Referenzspannungsquelle (11b) verbunden ist.

3. Eingabebaugruppe (1) nach Anspruch 1, wobei die Eingangskanäle (2a,2b) als Spannungsteiler (4a,4b) ausgebildet sind.

4. Eingabebaugruppe (1) nach einem der Ansprüche 1 bis 3, wobei zum Vergleich der digitalisierten Eingangswerte ein Microcontroller (9) mit den Analog-Digital-Umsetzern (6a,6b) verschaltet ist.

5. Verfahren zur Fehlererkennung bei einer Eingabebaugruppe (1) zur Erfassung analoger Messwerte (3a,3b), wobei über einen ersten Eingangskanal (2a) ein erstes Messsignal (3a) mittels eines Multiplexers (5a) an den Eingang eines ersten Analog-Digital-Umsetzers (6a) als erster Eingangswert (7a) und an den Eingang eines zweiten Analog-Digital-Umsetzers (6b) als zweiten Eingangswert (7b) geschaltet wird, wobei im Fehlerfall die Eingangswerte (7a,7b) über Mittel zur Bildung einer Differenz beeinflusst werden und diese Differenz als Fehler erkannt wird, wobei über einen Längswiderstand (8), welcher zwischen dem Multiplexern (5a,5b) und dem Eingang des Analog-Digital-Umsetzers (6a,6b) geschaltet wird, die Spannung des Eingangswertes (7a,7b) beeinflusst wird, **da** - **durch gekennzeichnet**, dass Testpegel auf die Analog-Digital-Umsetzer (6a,6b) derart aufgeschaltet werden, dass **dadurch** eine Funktionsweise von Schaltern (S1,...,S6) der Multiplexer (5a,5b) getestet wird, wobei in einem Fehlerfall über den Längswiderständen (8) eine Spannung abfällt und durch entstehende Unsymmetrien kann ein Fehler aufgedeckt werden.

6. Verfahren nach Anspruch 5, wobei die Aufschaltung der Testpegel in Verbindung mit einer Prüfung eines Referenzsignals (11a, 11b) erfolgt.

7. Verfahren nach Anspruch 5 oder 6, wobei der digitalisierte analoge erste Eingangswert (7a) mit dem digitalisierten anlogen zweiten Eingangswert (7b) verglichen und wenn die Differenz eine bestimmbare Grenze überschreitet ein Fehler gemeldet wird.

## Claims

1. Input assembly (1) for recording analogue measured values, comprising a first input channel (2a) for a first measurement signal (3a), a second input channel (2b) for a second measurement signal (3b), a first multiplexer (5a), a second multiplexer (5b), a first analogue/digital converter (6a), and a second analogue/digital converter (6b), one multiplexer (5a, 5b) being assigned to each input channel (2a, 2b), and the first multiplexer (5a) being connected to the first and second analogue/digital converters (6a, 6b) in such a manner that the first measurement signal (3a) is applied to the first analogue/digital converter (6a) as a first input value (7a) and is applied to the second analogue/digital converter (6b) as a second input value (7b), means for forming a difference between the first input value (7a) and the second input value (7b) being arranged between the input channels (2a, 2b) and the analogue/digital converters (6a, 6b), the means for forming the difference being in the form of series resistors (8) arranged between the multiplexers (5a, 5b) and the inputs of the analogue/digital converters (6a, 6b), **characterized in that** a first connecting device (10a) and a second connecting device (10b) are provided, which devices are designed to switch one test level each to the first and second analogue/digital converters (6a, 6b) in such a manner that, if a switch (S1, ..., S6) of one of the multiplexers (5a, 5b) no longer opens correctly, voltages may be dropped across the series resistors (8), a fault being discovered by the asymmetries produced.

2. Input assembly (1) according to Claim 1, the first analogue/digital converter (6a) being connected to a first reference voltage source (11a) and the second analogue/digital converter (6b) being connected to a second reference voltage source (11b).

3. Input assembly (1) according to Claim 1, the input channels (2a, 2b) being in the form of voltage dividers (4a, 4b).

4. Input assembly (1) according to one of Claims 1 to 3, a microcontroller (9) being connected to the analogue/digital converters (6a, 6b) in order to compare the digitized input values.

5. Method for detecting faults in an input assembly (1) for recording analogue measured values (3a, 3b), a first measurement signal (3a) being switched to the input of a first analogue/digital converter (6a) as a first input value (7a) and being switched to the input of a second analogue/digital converter (6b) as a second input value (7b) via a first input channel (2a) by means of a multiplexer (5a), the input values (7a, 7b) being influenced via means for forming a difference in the event of a fault and this difference being identified as a fault, the voltage of the input value (7a, 7b) being influenced via a series resistor (8) connected between the multiplexers (5a, 5b) and the input of the analogue/digital converter (6a, 6b), **characterized in that** test levels are applied to the analogue/digital converters (6a, 6b) in such a manner that a method of operation of switches (S1, ..., S6) of the multiplexers (5a, 5b) is tested thereby, a voltage being dropped across the series resistors (8) in the event of a fault, and a fault being able to be discovered by asymmetries produced.

6. Method according to Claim 5, the test levels being applied in conjunction with testing of a reference signal (11a, 11b).

7. Method according to Claim 5 or 6, the digitized analogue first input value (7a) being compared with the digitized analogue second input value (7b), and a fault being reported if the difference exceeds a limit which can be determined.

## Revendications

1. module ( 1 ) de saisie pour le relevé de valeurs de mesure analogiques, comprenant un premier canal ( 2a ) d'entrée d'un premier signal (3a) de mesure, un deuxième canal ( 2b ) d'entrée d'un deuxième signal ( 3b ) de mesure, un premier multiplexeur ( 5a ), un deuxième multiplexeur ( 5b ), un premier convertisseur ( 6a ) analogique-numérique, un deuxième convertisseur ( 6b ) analogique-numérique, respectivement un multiplexeur ( 5a, 5b ) étant affecté à un canal (2a, 2b ) d'entrée et le premier multiplexeur ( 5a ) étant câblé avec le premier et avec le deuxième convertisseurs ( 6a, 6b ) analogiques-numériques, de manière à appliquer le premier signal ( 3a ) de mesure comme première valeur ( 7a ) d'entrée au premier convertisseur ( 6a ) analogique-numérique et comme deuxième valeur ( 7b ) d'entrée au deuxième convertisseur ( 6b ) analogique-numérique, des moyens de formation d'une différence entre la première valeur (7a) d'entrée et la deuxième valeur (7b) d'entrée étant disposés entre les canaux (2a, 2b) d'entrée et les convertisseurs ( 6a, 6b ) analogiques-numériques, les moyens de formation de la différence étant constitués sous la forme de résistances ( 8 ) en série montées entre les multiplexeurs ( 5a, 5b ) et les entrées des convertisseurs ( 6a, 6b ) analogiques-numériques, **caractérisé en ce qu'**il y a un premier dispositif ( 10a ) de commutation et un deuxième dispositif ( 10b ) de commutation, ceux-ci étant constitués pour mettre un niveau de test sur le premier et sur le deuxième convertisseurs (6a, 6b ) analogiques-numériques, de manière à ce que, dans le cas où un commutateur ( S1, ..., S6 ) de l'un des multiplexeurs ( 5a, 5b ) ne s'ouvre plus correctement, des tensions aux bornes des résistances ( 8 ) en série puissent chuter, de sorte que, par les dissymétries créées, un cas d'erreur soit découvert.

2. Module (1) de saisie suivant la revendication 1, dans lequel le premier convertisseur (6a) analogique-numérique est relié à une première source ( 11a ) de tension de référence et le deuxième convertisseur (6b) analogique-numérique est relié à une deuxième source ( 11b ) de tension de référence.

3. Module (1) de saisie suivant la revendication 1, dans lequel les canaux ( 2a, 2b ) d'entrée sont constitués sous la forme de diviseurs ( 4a, 4b ) de tension.

4. Module ( 1 ) de saisie suivant l'une des revendications 1 à 3, dans lequel, pour comparer les valeurs d'entrée numérisées, un microcontrôleur ( 9 ) est relié aux convertisseurs (6a, 6b ) analogiques-numériques.

5. Procédé de détection d'erreurs dans un module (1) de saisie pour le relevé de valeurs (3a, 3b ) de mesure analogiques, dans lequel on applique, par un premier canal ( 2a ) d'entrée, un premier signal ( 3a ) de mesure au moyen d'un multiplexeur ( 5a ) à l'entrée d'un premier convertisseur ( 6a ) analogique-numérique en tant que première valeur ( 7a ) d'entrée et à l'entrée d'un deuxième convertisseur ( 6b ) analogique-numérique, en tant que deuxième valeur ( 7b ) d'entrée, dans lequel, en cas d'erreur, les valeurs ( 7a, 7b ) d'entrée sont influencées par des moyens de formation d'une différence et cette différence est détectée comme une erreur, dans lequel on influe, par une résistance ( 8 ) en série, qui est montée entre les multiplexeurs ( 5a, 5b ) et l'entrée du convertisseur ( 6a, 6b ) analogique-numérique, sur la tension de la valeur ( 7a, 7b ) d'entrée, **caractérisé en ce qu'**on met des niveaux de test sur les convertisseurs (6a, 6b ) analogiques-numériques, de manière à tester ainsi un mode de fonctionnement des commutateurs ( S1, ..., S6) des multiplexeurs ( 5a, 5b ), une tension chutant en cas d'erreur aux bornes des résistances ( 8 ) en série et, par les dissymétries créées, une erreur pouvant être découverte.

6. Procédé suivant la revendication 5, dans lequel on met les niveaux de test en liaison avec un contrôle d'un signal ( 11a, 11b ) de référence.

7. Procédé suivant la revendication 5 ou 6, dans lequel on compare la première valeur (7a) d'entrée analogique numérisée à la deuxième valeur (7b) d'entrée analogique numérisée et, si la différence dépasse une limite qui peut être déterminée, on indique une erreur.
